# EUROPÄISCHE PATENTSCHRIFT

(11) **EP 1 741 249 B1**
(45) Veröffentlichungstag und Bekanntmachung des Hinweises auf die Patenterteilung: **19.01.2011**
(21) Anmeldenummer: 05743081.1
(22) Anmeldetag: 07.04.2005
(51) Int. Cl.: H04L 12/56

(54) **Verfahren, Teilnehmerstation und Netzseitige Einrichtung zur Funkkommunikation inbesondere im Rahmen des HSDPA-Dienstes**
Method, subscriber station and network arrangement for radio communication within the framework of HSDPA services
Procédé, station d'abonné et dispositif de réseau pour la communication radio, en particulier dans le contexte de services HSDPA

(30) Priorität: 30.04.2004 EP 04010358
(43) Veröffentlichungstag der Anmeldung: 10.01.2007
(73) Patentinhaber: Nokia Siemens Networks GmbH & Co. KG, 81541 München (DE)
(72) Erfinder: BREUER, Volker, 16727 Bötzow (DE); CHARPENTIER, Frederic, 10115 Berlin (DE); LAMPRECHT, Frank, 10439 Berlin (DE)
(86) Internationale Anmeldenummer: PCT/EP2005/051545
(87) Internationale Veröffentlichungsnummer: WO 2005/107180

(56) Entgegenhaltungen:
- EP-A- 0 881 786
- WO-A-99/20011
- WO-A-2004/034608
- US-A1- 2002 050 370

## Beschreibung

Die Erfindung betrifft ein Verfahren zur Kommunikation per Funk, bei dem von einer Teilnehmerstation zur Versendung von Nachrichten zwei unterschiedliche Codes verwendet werden, wobei die Verwendung des ersten der beiden Codes temporär unterbrochen und die Verwendung des zweiten der beiden Codes während der Unterbrechung fortgeführt wird. Weiterhin betrifft die Erfindung eine Teilnehmerstation und eine netzseitige Einrichtung zur Durchführung des Verfahrens.

In Funkkommunikationssystemen werden Nachrichten, mit beispielsweise Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige Teilnehmerstationen oder netzseitige Funkstationen wie Basisstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Die von den Funkzugangspunkten (AP: Access Point) der WLANs abgedeckten Zellen sind mit einem Durchmesser von bis zu einigen hundert Metern im Vergleich zu üblichen Mobilfunkzellen klein. Beispiele verschiedener Standards für WLANs sind HiperLAN, DECT, IEEE 802.11, Bluetooth und WATM.

Der Zugriff von Teilnehmerstationen auf das gemeinsame Übertragungsmedium wird bei Funkkommunikationssystemen durch Vielfachzugriffsverfahren/Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Teilnehmerstationen aufgeteilt werden. Auch Kombinationen von Vielfachzugriffsverfahren sind möglich.

Bei Codebereichs-Vielfachzugriffsverfahren werden für die Kommunikation von Teilnehmerstationen teilnehmerspezifische Codes verwendet, so dass in Abwärtsrichtung die jeweilige Teilnehmerstation bzw. in Aufwärtsrichtung netzseitige Einrichtungen die Nachrichten an die bzw. von der Teilnehmerstation von den Nachrichten an bzw. von anderen Teilnehmerstationen unterscheiden können, indem eine Korrelation zwischen dem empfangenen Signal und dem teilnehmerspezifischen Code durchgeführt wird. Es ist möglich, dass eine Teilnehmerstation mehrere Codes zur Versendung von Nachrichten verwendet. In diesem Fall dienen die verschiedenen Codes zur Unterscheidung von verschiedenen von der Teilnehmerstation genutzten Übertragungskanälen, wie z.B. zur Unterscheidung zwischen Kanälen zur Übertragung von Nutz- und Signalisierungsinformationen, oder zur Unterscheidung von Kanälen verschiedener Dienste.

Das Dokument WO 2004/034608 A1 beschreibt ein Verfahren zur Auswahl eines geeigneten TFC (Transport Format Combination). Betrachtet wird hierbei die Situation, dass eine Teilnehmerstation zwei CCTrCH (Coded Composite Transport Channel) verwendet. Es wird überprüft, ob die Sendeleistung der beiden CCTrCH größer als die maximal erlaubte Sendeleistung ist. Trifft dies zu, so wird die Datenrate von einem oder beiden CCTrCH reduziert.

Der Erfindung liegt die Aufgabe zugrunde, ein effizientes Verfahren zur Kommunikation per Funk vorzustellen, bei welchem eine Teilnehmerstation eine Mehrzahl von Codes zur Versendung von Nachrichten verwendet. Weiterhin sollen eine Teilnehmerstation und eine netzseitige Einrichtung zur Durchführung des Verfahrens vorgestellt werden.

Diese Aufgabe wird durch ein Verfahren mit den Merkmalen des Anspruchs 1 und durch eine Teilnehmerstation und eine netzseitige Einrichtung mit den Merkmalen von nebengeordneten Ansprüchen gelöst.

Vorteilhafte Ausgestaltungen und Weiterbildungen sind Gegenstand von Unteransprüchen.

In dem Verfahren zur Kommunikation per Funk werden von einer Teilnehmerstation an eine netzseitige Funkstation erste Nachrichten unter Verwendung eines ersten Codes und zweite Nachrichten unter Verwendung eines zweiten Codes übertragen. Die Verwendung des ersten Codes durch die Teilnehmerstation wird temporär unterbrochen und die Verwendung des zweiten Codes wird während dieser Unterbrechung fortgeführt. Erfindungsgemäß wird die Verwendung des ersten Codes durch die Teilnehmerstation wieder aufgenommen in Abhängigkeit von einer Sendeleistung, welche für die Verwendung des ersten Codes durch die Teilnehmerstation verfügbar ist.

Codes werden in Funkkommunikationssystemen, so zum Beispiel in einem UMTS-Funkkommunikationssystem, eingesetzt, um auf verschiedenen Kanälen gesendete Nachrichten voneinander unterscheidbar zu machen. Somit können Nachrichten verschiedener Teilnehmerstationen voneinander unterschieden werden, und auch Nachrichten einer Teilnehmerstation, welche auf verschiedenen Kanälen gesendet werden. Bei einem Code handelt es sich in UMTS um eine Kombination aus einem Spreiz- (spreading) und einem Verwürfelungs- (scrambling) Code. Neben dem ersten und dem zweiten Code können von der betrachteten Teilnehmerstation auch weitere Codes verwendet werden, so ist es z.B. möglich, dass das erfindungsgemäße Verfahren in Bezug auf eine Mehrzahl von ersten und/oder von zweiten Codes durchgeführt wird. Die Versendung der ersten und der zweiten Nachrichten durch die Teilnehmerstation kann parallel erfolgen, dass heißt die ersten und die zweiten Nachrichten können gleichzeitig versendet werden.

Nach einer Zeitspanne, während welcher sowohl der erste als auch der zweite Code von der Teilnehmerstation verwendet wurde, wird die Verwendung des ersten Codes abgebrochen. Diese Unterbrechung der Verwendung des ersten Codes hat zur Folge, dass während der Unterbrechung lediglich die zweiten Nachrichten unter Verwendung des zweiten Codes von der Teilnehmerstation gesendet werden. Die Unterbrechung kann zum Beispiel durch eine Verschlechterung der Übertragungsbedingungen in Aufwärtsrichtung, dass heißt in Richtung von der Teilnehmerstation zu der netzseitigen Funkstation, hervorgerufen werden. Eine Verschlechterung von Übertragungsbedingungen kann sich zum Beispiel für die Teilnehmerstation dadurch bemerkbar machen, dass durch die netzseitige Funkstation Aufforderungen zur Steigerung der Sendeleistung an die Teilnehmerstation gesendet werden. Vorzugsweise wird der erste Code während der Unterbrechung seiner Verwendung nicht einer anderen Teilnehmerstation zugewiesen, sondern bleibt der betrachteten Teilnehmerstation zugewiesen, welche ihn lediglich für den Zeitraum der temporären Unterbrechung nicht zur Nachrichtenversendung verwendet.

Die wiederaufnahme der Verwendung des ersten Codes hängt von einer für die Verwendung des ersten Codes durch die Teilnehmerstation verfügbaren Sendeleistung ab. Bei einer solchen verfügbaren Sendeleistung kann es sich zum Beispiel um eine aktuell für die Verwendung des ersten Codes zur Verfügung stehende Sendeleistung handeln, oder auch um eine zukünftig bzw. zukünftig unter bestimmten Bedingungen zur Verfügung stehende Sendeleistung, wie zum Beispiel um eine nach einer in Bezug auf die Verwendung des zweiten Codes erfolgten Sendeleistungsveränderung verfügbare Sendeleistung.

In Weiterbildung der Erfindung hängt die Sendeleistung, welche für die Verwendung des ersten Codes durch die Teilnehmerstation verfügbar ist, von einer maximal von der Teilnehmerstation einsetzbaren Sendeleistung und einer für die Verwendung des zweiten Codes durch die Teilnehmerstation einsetzbaren Sendeleistung ab. Eine maximal einsetzbare Sendeleistung kann zum Beispiel durch die Hardware der Teilnehmerstation vorgegeben sein, sie kann netzseitig oder durch einen Funkkommunikationsstandard vorgegeben sein, sie kann abhängen von bestimmten Umständen, wie zum Beispiel davon, wie viele Codes eine Teilnehmerstation zur Versendung von Nachrichten verwendet. So ist bei vielen Teilnehmerstationen die einsetzbare Sendeleistung für den Fall, dass die Teilnehmerstation eine Mehrzahl von Codes einsetzt, kleiner als für den Fall, dass nur ein einziger Code eingesetzt wird. Die für die Verwendung des ersten Codes verfügbare Sendeleistung kann sich zum Beispiel ergeben aus einer maximal einsetzbaren Sendeleistung abzüglich einer für die Verwendung des zweiten Codes einsetzbaren Sendeleistung.

Einer vorteilhaften Weiterbildung der Erfindung gemäß wird die Sendeleistung, welche für die Verwendung des ersten Codes durch die Teilnehmerstation verfügbar ist, von der Teilnehmerstation während der Unterbrechung der Verwendung des ersten Codes ermittelt. In diesem Fall kann die Teilnehmerstation die Verwendung des ersten Codes von sich aus, d.h. ohne durch die netzseitige Funkstation hierzu aufgefordert worden zu sein, wieder aufnehmen, wenn sie ermittelt hat, dass eine ausreichende Sendeleistung für die Verwendung des ersten Codes verfügbar ist.

Es ist vorteilhaft, wenn in die teilnehmerseitige Ermittlung der Sendeleistung eingehen: eine maximal von der Teilnehmerstation einsetzbare Sendeleistung, eine aktuell während der Unterbrechung der Verwendung des ersten Codes von der Teilnehmerstation für die Verwendung des zweiten Codes eingesetzte Sendeleistung, und eine andere als die aktuell während der Unterbrechung der Verwendung des ersten Codes von der Teilnehmerstation für die Verwendung des zweiten Codes eingesetzte von der Teilnehmerstation für die Verwendung des zweiten Codes einsetzbare Sendeleistung. Auch weitere Größen können in die teilnehmerseitige Ermittlung der für die Wiederaufnahme relevanten Sendeleistung einbezogen werden. Durch die beschriebene Abhängigkeit der ermittelten Sendeleistung kann von der Teilnehmerstation bestimmt werden, wie viel Sendeleistung in Anbetracht einer maximal zur Verfügung stehenden Sendeleistung für den ersten Code zur Verfügung steht, wenn von der aktuell für den zweiten Code verwendeten Sendeleistung zu einer anderen für den zweiten Code verwendbaren Sendeleistung übergegangen wird.

In Weiterbildung der Erfindung wird die Sendeleistung, welche für die Verwendung des ersten Codes durch die Teilnehmerstation verfügbar ist, von einer netzseitigen Einrichtung während der Unterbrechung der Verwendung des ersten Codes ermittelt. Bei der netzseitigen Einrichtung kann es sich um die netzseitige Funkstation oder um eine andere, mit der netzseitigen Funkstation verbundene, Einrichtung handeln. Die netzseitige Funkstation kann die Teilnehmerstation zur Wiederaufnahme der Verwendung des ersten Codes durch die Versendung einer entsprechenden Nachricht auffordern, wenn netzseitig ermittelt wurde, dass für die Verwendung des ersten Codes ausreichend Sendeleistung zur Verfügung steht.

Vorteilhaft ist es, wenn in die netzseitige Ermittlung der Sendeleistung eingehen: Informationen über eine von der Teilnehmerstation aktuell für die Nachrichtenübertragung unter Verwendung des zweiten Codes eingesetzte Datenrate, und Informationen über eine von der Teilnehmerstation unmittelbar vor der Unterbrechung der Verwendung des ersten Codes für die Nachrichtenübertragung unter Verwendung des zweiten Codes eingesetzte Datenrate. Vorzugsweise beziehen sich beide Datenraten ausschließlich auf die zweiten Nachrichten. Die jeweiligen Datenraten können netzseitig bei UMTS zum Beispiel aus dem TFC (Transport Format Combination) entnommen werden. Datenraten sind insofern mit einer teilnehmerseitigen Sendeleistung verknüpft, als bei gegebenen Übertragungsbedingungen und gegebener Empfangsqualität in der netzseitigen Funkstation Nachrichten von der Teilnehmerstation entweder mit hoher Sendeleistung und hoher Datenrate oder mit niedrigerer Sendeleistung und niedrigerer Datenrate gesendet werden können. Die Wiederaufnahme der Verwendung des ersten Codes bzw. die netzseitige Entscheidung über die Wiederaufnahme kann insbesondere mit einem Schwellenwertkriterium verknüpft werden, so zum Beispiel, dass dann, wenn sich die Datenrate seit der Unterbrechung mindestens um einen bestimmten Wert verändert hat, für die Verwendung des ersten Codes eine ausreichende Sendeleistung zur Verfügung steht, so dass die Verwendung des ersten Codes dann wieder aufgenommen werden kann.

Zusätzlich oder alternativ können in die netzseitige Ermittlung der Sendeleistung Informationen über von der netzseitigen Funkstation an die Teilnehmerstation während der Unterbrechung der Verwendung des ersten Codes gesendete Sendeleistungsteuerungssignale eingehen. Aus dem Unterschied zwischen der Sendeleistung zum Zeitpunkt des Abbruchs der Verwendung des ersten Codes und der aktuellen Sendeleistung, welcher netzseitig aufgrund der versendeten Sendeleistungssteuerungssignale bekannt ist bzw. ermittelt werden kann, können netzseitig Rückschlüsse auf die Veränderung der Übertragungsbedingungen in Aufwärtsrichtung und somit auf eine für die Verwendung des ersten Codes verfügbare Sendeleistung erfolgen. Auch in diesem Fall kann die Wiederaufnahme der Verwendung des ersten Codes bzw. die netzseitige Entscheidung über die Wiederaufnahme mit einem Schwellenwertkriterium verknüpft werden, so zum Beispiel in der Art, dass dann, wenn die Sendeleistung um eine bestimmte Anzahl von Malen reduziert werden sollte, ausreichend Sendeleistung für die Verwendung des ersten Codes zur Verfügung steht.

In Ausgestaltung der Erfindung handelt es sich bei den ersten Nachrichten um Nachrichten eines HS-DPCCH (High Speed Data Packet Control Channel) Kanals und bei den zweiten Nachrichten um Nachrichten eines DPDCH (Dedicated Physical Data Channel) Kanals oder eines DPCCH (Dedicated Physical Control Channel) Kanals eines UMTS-Funkkommunikationssystems. Bei dem DPDCH und dem DPCCH Kanal handelt es sich um die dedizierten Kanäle in UMTS, während der HS-DPCCH ein für den HSDPA (High Speed Downlink Packet Access) Dienst genutzter Signalisierungskanal in Aufwärtsrichtung ist. Hintergründe über den HSDPA-Dienst in UMTS finden sich in den Standarddokumenten 3GPP TS 25.211, 3GPP TS 25.212, 3GPP TS 25.213 und 3GPP 25.214.

Die erfindungsgemäße Teilnehmerstation für ein Funkkommunikationssystem weist Mittel zum Versenden von ersten Nachrichten unter Verwendung eines ersten Codes und von zweiten Nachrichten unter Verwendung eines zweiten Codes an eine netzseitige Funkstation auf, und Mittel zum Unterbrechen der Verwendung des ersten Codes und zum Fortführen der Verwendung des zweiten Codes während der Unterbrechung der Verwendung des ersten Codes, sowie Mittel zum Wiederaufnehmen der Verwendung des ersten Codes in Abhängigkeit von einer Sendeleistung, welche für die Verwendung des ersten Codes verfügbar ist.

In Ausgestaltung der Erfindung verfügt die Teilnehmerstation weiterhin über Mittel zum Ermitteln der Sendeleistung, welche für die Verwendung des ersten Codes verfügbar ist. Diese Mittel können in Abhängigkeit vom Ergebnis der Ermittlung der Sendeleistung die Mittel zum Wiederaufnehmen ansteuern.

Die erfindungsgemäße netzseitige Einrichtung für ein Funkkommunikationssystem weist Mittel zum Empfangen von ersten unter Verwendung eines ersten Codes gesendeten Nachrichten und zweiten unter Verwendung eines zweiten Codes gesendeten Nachrichten von einer Teilnehmerstation auf, und Mittel zum Ermitteln einer Sendeleistung, welche für die Verwendung des ersten Codes durch die Teilnehmerstation zur Verfügung steht. Die erfindungsgemäße netzseitige Einrichtung kann weiterhin Mittel zum Anordnen, dass die Teilnehmerstation den ersten Code zur Verwendung von Nachrichten einsetzen soll, aufweisen. Diese Anordnung erfolgt in Abhängigkeit von de ermittelten Sendeleistung.

Die erfindungsgemäße Teilnehmerstation und die erfindungsgemäße netzseitige Einrichtung eignen sich insbesondere zur Durchführung des erfindungsgemäßen Verfahrens, wobei dies auch auf die Ausgestaltungen und Weiterbildungen zutrifft. Hierzu können sie weitere geeignete Mittel aufweisen. Die erfindungsgemäße Teilnehmerstation und netzseitige Einrichtung können auch durch eine Mehrzahl an miteinander verbundenen Einrichtungen mit den jeweiligen Mitteln realisiert werden.

Im folgenden wird die Erfindung anhand eines Ausführungsbeispiels näher erläutert. Dabei zeigen:
- Figur 1:: einen Ausschnitt aus einem UMTS- Funkkommunikationssystem,
- Figur 2:: schematisch den Aufbau einer erfindungsgemäßen Teilnehmerstation und einer erfindungsgemäßen netz- seitigen Einrichtung.

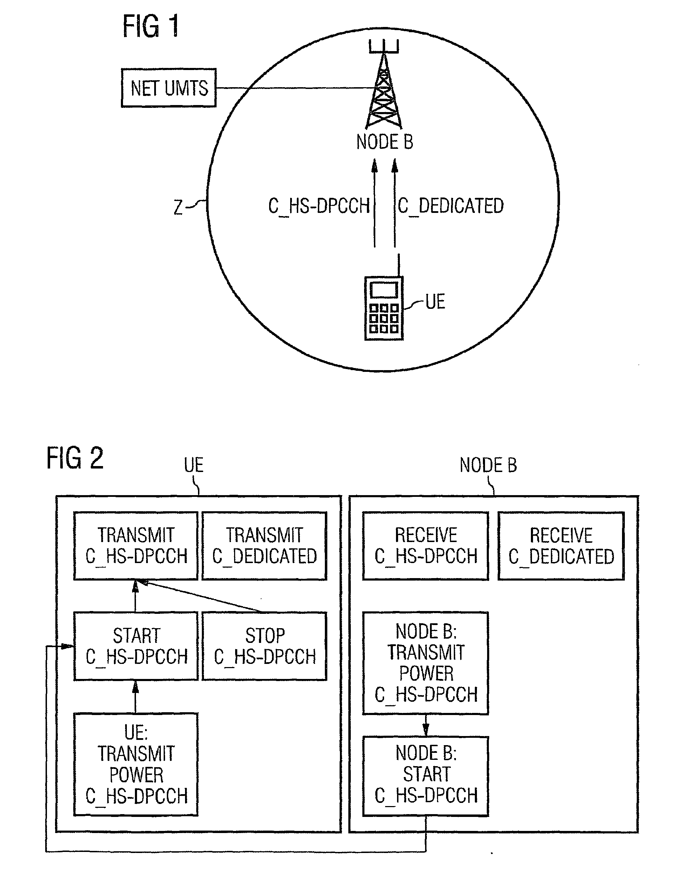

In Figur 1 ist eine Funkzelle Z, vereinfachend mit einem Kreis symbolisiert, einer Basisstation NODE B eines UMTS-Funkkommunikationssystems dargestellt. Die Basisstation NODE B ist mit weiteren netzseitigen Einrichtungen NET UMTS des UMTS-Funkkommunikationssystems verbunden. Weitere Basisstationen des zellularen UMTS-Funkkommunikationssystems sind der Übersichtlichkeit halber nicht in Figur 1 dargestellt. In der Funkzelle Z der Basisstation NODE B befindet sich die teilnehmerseitige Mobilstation UE, welche mit der Basisstation NODE B per Funk entsprechend dem UMTS Standard kommuniziert.

In UMTS-Funkkommunikationssystemen werden verschiedene Kanäle durch Codes voneinander unterschieden. Hierbei können mehrere Codes von einer Teilnehmerstation verwendet werden. In Figur 1 ist der Fall dargestellt, dass der Mobilstation UE ein erster Codes C_HS-DPCCH und ein weiterer Code C_DEDICATED für die Aufwärtsrichtung zugewiesen sind, d.h. die Mobilstation UE verwendet die Codes C_HS-DPCCH und C_DEDICATED für die Versendung von Nachrichten an die Basisstation NODE B. Der Code C_DEDICATED entspricht den dedizierten Kanälen DPDCH (Dedicated Physical Data Channel) und DPCCH (Dedicated Physical Control Channel) der Mobilstation UE, welche für die Übertragung von Nutz- (im Falle des DPDCH) und von Signalisierungs- (im Falle des DPCCH) Informationen an die Basisstation NODE B eingesetzt werden.

Der Code C_HS-DPCCH entspricht dem Aufwärts-Signalisierungskanal HS-DPCCH (High Speed Data Packet Control Channel) des HSDPA Dienstes. Im Rahmen von HSDPA werden hochratige Datenübertragung in Abwärtsrichtung, d.h. von Basisstationen zu Teilnehmerstationen, ermöglicht durch die Verwendung von Modulationsverfahren höherer Ordnung im Zusammenspiel mit Übertragungswiederholungsverfahren, bei denen Übertragungswiederholungen inkrementelle Redundanz enthalten. Zur Übertragung der Daten wird in Abwärtsrichtung der Kanal HS-PDSCH (High Speed Physical Downlink Shared Channel) verwendet. Der Aufwärtskanal HS-DPCCH dient der Versendung von positiven oder negativen Empfangsbestätigungen in Form von ACK bzw. NACK Nachrichten in Bezug auf die Nachrichten des Kanals HS-DPCCH und von Informationen über die teilnehmerseitigen Empfangsbedingungen (CQI, Channel Quality Indicator) von Teilnehmerstationen an die jeweilige Basisstation. Den ACK bzw. NACK Nachrichten kann eine Basisstation entnehmen, ob ein Datenpaket des Kanals HS-DPCCH von der Teilnehmerstation empfangen bzw. korrekt empfangen wurde. Aus dem CQI Wert bestimmt die Basisstation die in Abwärtsrichtung für den Kanal HS-PDSCH zu verwendende Sendeleistung.

Im folgenden wird der Fall betrachtet, dass sich die Übertragungsbedingungen für den Funkkanal in Aufwärtsrichtung zwischen der Mobilstation UE und der Basisstation NODE B verschlechtern. Die Basisstation NODE B, welche eine verminderte Qualität der von der Teilnehmerstation UE empfangenen Signale registriert, reagiert darauf, indem sie der Mobilstation UE signalisiert, ihre Sendeleistung zu steigern. Bei zunehmend schlechteren Übertragungsbedingungen steigert die Mobilstation UE daher die Sendeleistung sowohl für den Code C_HS-DPCCH als auch für den Code C_DEDICATED. Ist bei zunehmend schlechten Übertragungsbedingungen die maximale Sendeleistung erreicht, verändert die Mobilstation UE den für die Nachrichtenübertragung auf den dedizierten Kanälen verwendeten TFC (Transport Format Combination). Der TFC ist verknüpft mit bestimmten Daten- und Codierraten. Bei gegebenen Übertragungsbedingungen kann eine Änderung des TFC in Kombination mit einer Anpassung der Sendeleistung derart stattfinden, dass für den Empfänger die Empfangsqualität in etwa gleich bleibt. Somit ist der TFC indirekt mit einer Sendeleistung verknüpft. Die Mobilstation UE passt bei sich verschlechternden Übertragungsbedingungen, nachdem die maximale Sendeleistung erreicht ist, den TFC derart an, dass für die dedizierten Kanäle eine geringere Sendeleistung benötigt wird, so dass die Sendeleistung für den Code C_HS-DPCCH gesteigert werden kann. Somit werden die Signalisierungsnachrichten des Kanals HS-DPCCH bevorzugt gegenüber den Nachrichten der dedizierten Kanäle DPDCH und DPCCH behandelt. Dies liegt darin begründet, dass die ACK und NACK Nachrichten für das ARQ-Verfahren des HSDPA-Dienstes wichtig sind.

Bei weiter sich verschlechternden Übertragungsbedingungen in Aufwärtsrichtung wird schließlich der TFC erreicht, welcher der minimalen Sendeleistung für die dedizieren Kanäle entspricht. Eine weitere Reduktion der Sendeleistung für die dedizieren Kanäle ist nicht mehr möglich, ohne dass die Teilnehmerstation UE den Kontakt zur Basisstation NODE B verliert. In diesem Fall müsste die Verbindung zwischen der Teilnehmerstation UE und der UMTS-Netz neu aufgebaut werden, was vermieden werden sollte. Daher wird die Verwendung des Kanals HS-DPCCH bzw. des entsprechenden Codes C_HS-DPCCH abgebrochen. Dieser Abbruch kann z.B. dadurch ausgelöst werden, dass die Teilnehmerstation UE von der Basisstation NODE B eine weitere Aufforderung zur Steigerung der Sendeleistung empfängt. Stellt die Teilnehmerstation UE fest, dass der TFC nicht weiter mit dem Effekt angepasst werden kann, dass die Sendeleistung für die dedizierten Kanäle reduziert werden kann, so erfolgt der Abbruch der Verwendung des Kanals HS-DPCCH.

Nachdem die Teilnehmerstation UE keine Nachrichten mehr auf dem Kanal HS-DPCCH versendet, steht ihre gesamte Sendeleistung für die beiden dedizierten Kanäle DPCCH und DPDCH zur Verfügung. Daher kann der TFC so geändert werden, dass für die Nachrichtenübertragung auf den dedizierten Kanälen DPCCH und DPDCH die maximale Sendeleistung der Teilnehmerstation UE eingesetzt wird. Hierbei fällt insbesondere ins Gewicht, dass die maximal mögliche Sendeleistung bei gleichzeitiger Verwendung des Codes C_HS-DPDCH und des dedizierten Codes C_DEDICATED in der Regel kleiner ist, als wenn lediglich die dedizierten Kanäle DPCCH und DPDCH verwendet werden. Die Differenz dieser beiden maximalen Sendeleistungen wird als Power Backoff bezeichnet. Dies trifft lediglich auf Teilnehmerstationen nicht zu, deren Verstärker über einen größeren Bereich ein lineares Verhalten aufweisen.

Der der Teilnehmerstation UE für den Kanal HS-DPCCH zugewiesene Code C_HS-DBCCH wird nach Abbruch seiner Verwendung nicht einer anderen Teilnehmerstation zugewiesen. Vielmehr soll der HSDPA-Dienst bei besseren Übertragungsbedingungen wieder aufgenommen werden. Erfindungsgemäß hängt die Wiederaufnahme der Versendung von Nachrichten auf dem Kanal HS-DPCCH davon ab, welche Sendeleistung für den Kanal HS-DPCCH verfügbar ist. Die Ermittlung dieser Sendeleistung und somit die Entscheidung über die Wiederaufnahme kann entweder teilnehmerseitig oder netzseitig erfolgen.

Wird die für den Kanal HS-DPCCH zur Verfügung stehende Sendeleistung teilnehmerseitig ermittelt, so kann die Teilnehmerstation UE eine Berechnung durchführen, welche im folgenden an einem Zahlenbeispiel beispielhaft dargestellt wird. Die maximale Sendeleistung der Teilnehmerstation UE für den Fall, dass lediglich die dedizierten Kanäle DPCCH und DPDCH verwendet werden, betrage 21 dBm. Die maximale Sendeleistung der Teilnehmerstation UE für den Fall, dass sowohl die dedizierten Kanäle DPCCH und DPDCH als auch der Kanal HS-DPCCH verwendet wird, betrage 19 dBm. Aktuell, während der Unterbrechung des Kanals HS-DPCCH, verwende die Teilnehmerstation UE einen TFC mit einer Datenrate von 64 kbit und einer Sendeleistung von 20 dBm. Die höchste Reduzierung der Sendeleistung für die Kanäle DPCCH und DPDCH ohne Verschlechterung der Empfangsqualität für die Basisstation NODE B im Fall von gleichbleibenden Übertragungsbedingungen kann durch einen Übergang auf einen TFC mit einer Datenrate von 2 kbit und einer Sendeleistung von 14 dBm erzielt werden. Der Teilnehmerstation UE ist weiterhin ein Quotient bekannt, welcher das zulässige Verhältnis zwischen der Sendeleistung der dedizierten Kanäle DPCCH und DPDCH und der Sendeleistung des Kanals HS-DPCCH angibt. Aus diesem Quotienten kann die minimal für die Verwendung des Kanals HS-DPCCH erforderliche Sendeleistung bei vorgegebener Sendeleistung für die dedizierten Kanäle DPCCH und DPDCH bestimmt werden. Beträgt der Quotient 1, so muss für den Kanal HS-DPCCH mindestens die Sendeleistung 14 dBm zur Verfügung stehen. Diese Sendeleistung steht tatsächlich zur Verfügung, da die maximale Sendeleistung 19 dBm beträgt und die minimal für die Kanäle DPCCH und DPDCH zu verwendende Sendeleistung 14 dBm beträgt.

Nachdem die Teilnehmerstation UE durch obige Berechnung festgestellt hat, dass die für den Kanal HS-DPCCH zur Verfügung stehende Sendeleistung ausreicht, verwendet sie den Code C_HS-DPCCH, um ihren aktuellen CQI-Wert an die Basisstation NODE B zu senden. Getriggert durch den Empfang dieser Nachricht auf dem Kanal HS-DPCCH nimmt die Basisstation NODE B die Versendung von HSDPA-Nachrichten in Abwärtsrichtung an die Teilnehmerstation UE wieder auf.

Eine netzseitige Ermittlung der für den Kanal HS-DPCCH zur Verfügung stehenden Sendeleistung unterscheidet sich insofern von der teilnehmerseitigen Berechnung, als netzseitig die tatsächlich von der Teilnehmerstation UE verwendete Sendeleistung nicht bekannt ist. Bekannt hingegen sind der aktuell während der Unterbrechung des Kanals HS-DPCCH von der Teilnehmerstation UE verwendete TFC, der zum Zeitpunkt der Einstellung der Verwendung des Kanals HS-DPCCH verwendete TFC, und die seit der Einstellung der Verwendung des Kanals HS-DPCCH an die Teilnehmerstation UE gesendeten Signale zur Leistungssteuerung. Vorteilhafterweise wird zur Ermittlung der für die Wiederaufnahme des Kanal HS-DPCCH relevanten Sendeleistung netzseitig ein Schwellenwertkriterium angewandt: übersteigt die Anzahl der Steigerungen des TFC hin zu größeren Datenraten eine bestimmte Schwellenwertanzahl, so ist die für den Code des Kanal HS-DPCCH zur Verfügung stehende Sendeleistung ausreichend. Eine Steigerungen des TFC hin zu größeren Datenraten zeigt eine Verbesserung der Übertragungsbedingungen an. Bei der Wahl des Schwellenwertes sollte allerdings berücksichtigt werden, dass der TFC unter Umständen schon alleine aufgrund der Einstellung des Kanals HS-DPCCH gesteigert werden kann, der Schwellenwert sollte also diese Steigerungen, die unabhängig von den Übertragungsbedingungen sind, beinhalten bzw. übersteigen. Zusätzlich oder alternativ kann auch die Veränderung der von der Teilnehmerstation UE verwendeten Sendleistung betrachtet werden. Aus der Summierung der in den Sendeleistungssteuerungssignalen, welche seit der Unterbrechung des Kanals HS-DPCCH an die Teilnehmerstation UE gesendet wurden, enthaltenen Aufforderungen zur Veränderung der teilnehmerseitigen Sendeleistung ist die Gesamtveränderung der teilnehmerseitigen Sendeleistung seit dem Abbruch des Kanals HS-DPCCH netzseitig bekannt. So kann ein Sendeleistungsschwellenwert, wie z.B. die Versendung von zehn "Down"-Aufforderungen, verwendet werden, ab welchem die für den Code des Kanal HS-DPCCH zur Verfügung stehende Sendeleistung ausreichend ist. Aus einer bestimmten Anzahl an Aufforderungen zur Verminderung der Sendeleistung kann auf eine deutliche Verbesserung der Übertragungsbedingungen in Aufwärtsrichtung geschlossen werden, so dass unter diesen Umständen eine Wiederaufnahme des HSDPA-Dienstes sinnvoll ist. Es ist möglich, dass netzseitig neben der Veränderung des TFC und der teilnehmerseitig verwendeten Sendeleistung weitere Größen, insbesondere z.B. der Wert des Power Backoff, berücksichtigt werden, um darüber zu entscheiden, ob die Sendeleistung für die Wiederaufnahme des Kanals HS-DPCCH ausreichend ist.

In den Fällen der netzseitigen Ermittlung der Sendeleistung muss die für den Kanal HS-DPCCH zur Verfügung stehende Sendeleistung nicht unbedingt explizit berechnet werden, sondern es kann aus dem Vorliegen bestimmter Bedingungen, wie der Veränderungen des TFC und/oder der Sendeleistung, auf eine ausreichende Sendeleistung für den Kanal HS-DPCCH geschlossen. Nachdem netzseitig festgestellt wurde, dass die für den Kanal HS-DPCCH zur Verfügung stehende Sendeleistung ausreichend ist, kann die Basisstation NODE B an die Teilnehmerstation UE erneut HSDPA-Nachrichten in Abwärtsrichtung versenden. Da der aktuelle CQI-Wert der Teilnehmerstation UE aufgrund der Unterbrechung der Verwendung des Kanals HS-DPCCH netzseitig nicht bekannt ist, kann die Sendeleistung in Abwärtsrichtung basierend auf dem niedrigst möglichen CQI-Wert bzw. dem zuletzt von der Teilnehmerstation UE signalisierten CQI-Wert bestimmt werden. Durch den Empfang einer solchen HSDPA-Nachricht beginnt die Teilnehmerstation UE erneut die Versendung der Nachrichten auf dem Kanal HS-DPCCH. Die Wiederaufnahme des Kanals HS-DPCCH durch die Teilnehmerstation UE kann jedoch auch dadurch ausgelöst werden, dass sie durch eine von der Basisstation NODE B versendete Nachricht direkt zur Versendung ihres aktuellen CQI-Wertes auf dem Kanal HS-DPCCH aufgefordert wird.

Sowohl das teilnehmerseitig als auch das netzseitig ermittelten Kriterium zur Wiederaufnahme des Kanals HS-DPCCH erlauben es, einen geeigneten Zeitpunkt zur Wiederaufnahme des HSDPA-Dienstes zu bestimmen, nachdem dieser aufgrund von schlechten Übertragungsbedingungen in Aufwärtsrichtung unterbrochen werden musste. Die oben beschriebenen netz- oder teilnehmerseitigen Ermittlungen gewährleisten, dass die Verwendung des Kanals HS-DPCCH erst dann wieder begonnen wird, wenn die Übertragungsbedingungen in Aufwärtsrichtung besser geworden sind. Ohne den Einsatz des erfindungsgemäßen Verfahrens wäre eine zu frühe Aufnahme der Verwendung des Kanals HS-DPCCH möglich, welche in einem Ping-Pong-Effekt resultieren würde, da bei Aufnahme des HS-DPCCH bei gleich schlechten Übertragungsbedingungen in Aufwärtsrichtung erneut der TFC für die dedizierten Kanäle bis zum Minimum reduziert werden müsste, um anschließend erneut die Verwendung des Kanals HS-DPCCH einzustellen. Dadurch, dass diese zu frühe Verwendung des Kanals HS-DPCCH durch das erfindungsgemäße Verfahren vermieden wird, werden Übertragungsressourcen für den HSDPA-Dienst in Abwärtsrichtung eingespart, außerdem wird durch den längeren Verzicht auf die Verwendung des Kanals HS-DPCCH weniger Interferenz erzeugt.

Figur 2 zeigt schematisch den Aufbau der Teilnehmerstation UE und der Basisstation NODE B. Über die Mittel TRANSMIT C_HS-DPCCH und TRANSMIT C_DEDICATED kann die Teilnehmerstation UE Nachrichten des Kanäle HS-DPCCH und der dedizierten Kanäle DPCCH und DPDCH versenden. Diese werden von der Basisstation NODE B mit den Mitteln RECEIVE C_HS-DPCCH und RECEIVE C_DEDICATED empfangen. Die Mittel STOP C_HS-DPCCH der Teilnehmerstation UE führen den Abbruch der Verwendung des Codes C_HS-DPCCH herbei, während die Verwendung des Codes C_DEDICATED davon unbeeinflusst bleibt. Eine Wiederaufnahme der Verwendung des Codes C_HS-DPCCH wird durch die Mittel START C_HS-DPCCH ausgelöst. Diese werden hierzu gesteuert von den Mitteln UE: TRANSMIT POWER C_HS-DPCCH, welche teilnehmerseitig die für die Verwendung des Codes C_HS-DPCCH verfügbare Sendeleistung bestimmen, oder indirekt von den Mitteln NODE B: TRANSMIT POWER C_HS-DPCCH der Basisstation NODE B, welche netzseitig die für die Verwendung des Codes C_HS-DPCCH verfügbare Sendeleistung bestimmen, woraufhin durch die Mittel NODE B: START C_HS-DPCCH eine Aufforderung an die Teilnehmerstation UE zur Wiederaufnahme des Kanals HS-DPCCH ergeht.

## Patentansprüche

1. Verfahren zur Kommunikation per Funk in einem Funkkommunikationssystem mit Codebereichs-Vielfachzugriffsverfahren, bei dem
von einer Teilnehmerstation (UE) an eine netzseitige Funkstation (NODE B) erste Nachrichten unter Verwendung eines ersten Codes (C_HS-DPCCH) und zweite Nachrichten unter Verwendung eines zweiten Codes (C_DEDICATED) übertragen werden,
die Verwendung des ersten Codes (C_HS-DPCCH) durch die Teilnehmerstation (UE) temporär unterbrochen und die Verwendung des zweiten Codes (C_DEDICATED) während der Unterbrechung fortgeführt wird,
**dadurch gekennzeichnet,**
**dass** die Verwendung des ersten Codes (C_HS-DPCCH) durch die Teilnehmerstation (UE) wieder aufgenommen wird in Abhängigkeit von einer Sendeleistung, welche für die Verwendung des ersten Codes (C_HS-DPCCH) durch die Teilnehmerstation (UE) verfügbar ist.

2. Verfahren nach Anspruch 1,
**dadurch gekennzeichnet,**
**dass** die Sendeleistung, welche für die Verwendung des ersten Codes (C_HS-DPCCH) durch die Teilnehmerstation (UE) verfügbar ist, von einer maximal von der Teilnehmerstation (UE) einsetzbaren Sendeleistung und einer für die Verwendung des zweiten Codes (C_DEDICATED) durch die Teilnehmerstation (UE) einsetzbaren Sendeleistung abhängt.

3. Verfahren nach Anspruch 1 oder 2,
**dadurch gekennzeichnet,**
**dass** die Sendeleistung, welche für die Verwendung des ersten Codes (C_HS-DPCCH) durch die Teilnehmerstation (UE) verfügbar ist, von der Teilnehmerstation (UE) während der Unterbrechung der Verwendung des ersten Codes (C_HS-DPCCH) ermittelt wird.

4. Verfahren nach Anspruch 3,
**dadurch gekennzeichnet,**
**dass** in die Ermittlung der Sendeleistung, welche für die Verwendung des ersten Codes (C_HS-DPCCH) durch die Teilnehmerstation (UE) verfügbar ist,
- eine maximal von der Teilnehmerstation (UE) einsetzbare Sendeleistung,
- eine aktuell während der Unterbrechung der Verwendung des ersten Codes (C_HS-DPCCH) von der Teilnehmerstation (UE) für die Verwendung des zweiten Codes (C_DEDICATED) eingesetzte Sendeleistung, und
- eine andere von der Teilnehmerstation (UE) für die Verwendung des zweiten Codes (C_DEDICATED) einsetzbare Sendeleistung
eingehen.

5. Verfahren nach Anspruch 1 oder 2,
**dadurch gekennzeichnet,**
**dass** die Sendeleistung, welche für die Verwendung des ersten Codes (C_HS-DPCCH) durch die Teilnehmerstation (UE) verfügbar ist, von einer netzseitigen Einrichtung (NODE B) während der Unterbrechung der Verwendung des ersten Codes (C_HS-DPCCH) ermittelt wird.

6. Verfahren nach Anspruch 5,
**dadurch gekennzeichnet,**
**dass** in die Ermittlung der Sendeleistung, welche für die Verwendung des ersten Codes (C_HS-DPCCH) durch die Teilnehmerstation (UE) verfügbar ist,
- Informationen über eine von der Teilnehmerstation (UE) aktuell für die Nachrichtenübertragung unter Verwendung des zweiten Codes (C_DEDICATED) eingesetzte Datenrate, und
- Informationen über eine von der Teilnehmerstation (UE) unmittelbar vor der Unterbrechung der Verwendung des ersten Codes (C_HS-DPCCH) für die Nachrichtenübertragung unter Verwendung des zweiten Codes (C_DEDICATED) eingesetzte Datenrate
eingehen.

7. Verfahren nach Anspruch 5 oder 6,
**dadurch gekennzeichnet,**
**dass** in die Ermittlung der Sendeleistung, welche für die Verwendung des ersten Codes (C_HS-DPCCH) durch die Teilnehmerstation (UE) verfügbar ist,
- Informationen über von der netzseitigen Funkstation (NODE B) an die Teilnehmerstation (UE) während der Unterbrechung der Verwendung des ersten Codes (C_HS-DPCCH) gesendete Sendeleistungssteuerungssignale eingehen.

8. Verfahren nach einem der Ansprüche 1 bis 7,
**dadurch gekennzeichnet,**
**dass** es sich bei den ersten Nachrichten um Nachrichten eines HS-DPCCH Kanals und bei den zweiten Nachrichten um Nachrichten eines DPDCH Kanals oder eines DPCCH Kanals eines UMTS-Funkkommunikationssystems handelt.

9. Teilnehmerstation (UE) für ein Funkkommunikationssystem mit Codebereichs-Vielfachzugriffsverfahren, mit Mitteln (TRANSMIT C_HS-DPCCH, TRANSMIT C_DEDICATED) zum Versenden von ersten Nachrichten unter Verwendung eines ersten Codes (C_HS-DPCCH) und zweiten Nachrichten unter Verwendung eines zweiten Codes (C_DEDICATED) an eine netzseitige Funkstation (NODE B),
Mitteln (STOP C_HS-DPCCH) zum Unterbrechen der Verwendung des ersten Codes (C_HS-DPCCH) und zum Fortführen der Verwendung des zweiten Codes (C_DEDICATED) während der Unterbrechung der Verwendung des ersten Codes (C_HS-DPCCH), **dadurch gekennzeichnet,**
**dass** sie weiterhin aufweist:
Mittel (START C_HS-DPCCH) zum Wiederaufnehmen der Verwendung des ersten Codes (C_HS-DPCCH) in Abhängigkeit von einer Sendeleistung, welche für die Verwendung des ersten Codes (C_HS-DPCCH) verfügbar ist.

10. Teilnehmerstation (UE) nach Anspruch 9 mit
Mitteln (UE: TRANSMIT POWER C_HS-DPCCH) zum Ermitteln der Sendeleistung, welche für die Verwendung des ersten Codes (C_HS-DPCCH) verfügbar ist.

11. Netzseitige Einrichtung (NODE B) für ein Funkkommunikationssystem mit Codebereichs-Vielfachzugriffsverfahren, mit Mitteln (RECEIVE C_HS-DPCCH, RECEIVE C_DEDICATED) zum Empfangen von ersten unter Verwendung eines ersten Codes (C_HS-DPCCH) gesendeten Nachrichten und zweiten unter Verwendung eines zweiten Codes (C_DEDICATED) gesendeten Nachrichten von einer Teilnehmerstation (UE),
**dadurch gekennzeichnet,**
**dass** sie weiterhin aufweist:
Mittel zum Empfangen von unter Verwendung des zweiten Codes (C_DEDICATED) gesendeten Nachrichten von der Teilnehmerstation (UE) während einer temporären Unterbrechung der Verwendung des ersten Codes (C_HS-DPCCH),
Mittel (NODE B: TRANSMIT POWER C_HS-DPCCH) zum während der temporären Unterbrechung Ermitteln einer Sendeleistung, welche für die Verwendung des ersten Codes (C_HS-DPCCH) durch die Teilnelimerstation (UE) zur Verfügung steht, zur Verwendung bei einer Entscheidung über eine Wiederaufnahme durch die Teilnehmerstation (UE) der Verwendung des ersten Codes (C_HS-DPCCH) nach der temporären Unterbrechung der Verwendung des ersten Codes (C_HS-DPCCH).

## Claims

1. Method for communication by radio in a radio communication system using code-division multiple access methods, in which a subscriber station (UE) sends a network-end radio station (NODE B) first messages using a first code (C_HS-DPCCH) and second messages using a second code (C_DEDICATED),
the use of the first code (C_HS-DPCCH) by the subscriber station (UE) is temporarily interrupted and the use of the second code (C_DEDICATED) is continued during the interruption, **characterized**
**in that** the use of the first code (C_HS-DPCCH) by the subscriber station (UE) is resumed on the basis of a transmission power which is available for the use of the first code (C_HS-DPCCH) by the subscriber station (UE).

2. Method according to Claim 1,
**characterized**
**in that** the transmission power which is available for the use of the first code (C_HS-DPCCH) by the subscriber station (UE) is dependent on a maximum transmission power which can be used by the subscriber station (UE) and on a transmission power which can be used for the use of the second code (C_DEDICATED) by the subscriber station (UE).

3. Method according to Claim 1 or 2,
**characterized**
**in that** the transmission power which is available for the use of the first code (C_HS-DPCCH) by the subscriber station (UE) is ascertained by the subscriber station (UE) during the interruption in the use of the first code (C_HS-DPCCH).

4. Method according to Claim 3,
**characterized**
**in that** the ascertainment of the transmission power which is available for the use of the first code (C_HS-DPCCH) by the subscriber station (UE) encompasses
- a maximum transmission power which can be used by the subscriber station (UE),
- a transmission power which is currently used by the subscriber station (UE) for the use of the second code (C_DEDICATED) during the interruption in the use of the first code (C_HS-DPCCH), and
- another transmission power which can be used by the subscriber station (UE) for the use of the second code (C_DEDICATED).

5. Method according to Claim 1 or 2,
**characterized**
**in that** the transmission power which is available for the use of the first code (C_HS-DPCCH) by the subscriber station (UE) is ascertained by a network-end device (NODE B) during the interruption in the use of the first code (C_HS-DPCCH).

6. Method according to Claim 5,
**characterized**
**in that** the ascertainment of the transmission power which is available for the use of the first code (C_HS-DPCCH) by the subscriber station (UE) encompasses
- information about a data rate currently used by the subscriber station (UE) for the message transmission using the second code (C_DEDICATED), and
- information about a data rate used by the subscriber station (UE) immediately before the interruption in the use of the first code (C_HS-DPCCH) for the message transmission using the second code (C DEDICATED).

7. Method according to Claim 5 or 6,
**characterized**
**in that** the ascertainment of the transmission power which is available for the use of the first code (C_HS-DPCCH) by the subscriber station (UE) encompasses
- information about transmission power control signals sent by the network-end radio station (NODE B) to the subscriber station (UE) during the interruption in the use of the first code (C_HS-DPCCH).

8. Method according to one of Claims 1 to 7,
**characterized**
**in that** the first messages are messages on an HS-DPCCH channel and the second messages are messages on a DPDCH channel or a DPCCH channel in a UMTS radio communication system.

9. Subscriber station (UE) for a radio communication system using code-division multiple access methods, having means (TRANSMIT C_HS-DPCCH, TRANSMIT C_DEDICATED) for sending first messages using a first code (C HS-DPCCH) and second messages using a second code (C_DEDICATED) to a network-end radio station (NODE B),
means (STOP C_HS-DPCCH) for interrupting the use of the first code (C_HS-DPCCH) and for continuing the use of the second code (C_DEDICATED) during the interruption in the use of the first code (C_HS-DPCCH),
**characterized**
**in that** it also has:
means (START C_HS-DPCCH) for resuming the use of the first code (C_HS-DPCCH) on the basis of a transmission power which is available for the use of the first code (C_HS-DPCCH).

10. Subscriber station (UE) according to Claim 9 having means (UE: TRANSMIT POWER C_HS-DPCCH) for ascertaining the transmission power which is available for the use of the first code (C_HS-DPCCH).

11. Network-end device (NODE B) for a radio communication system using code-division multiple access methods, having means (RECEIVE C_HS-DPCCH, RECEIVE C_DEDICATED) for receiving first messages sent using a first code (C_HS-DPCCH) and second messages sent using a second code (C_DEDICATED) from a subscriber station (UE),
**characterized**
**in that** it also has:
means for receiving messages sent using the second code (C_DEDICATED) from the subscriber station (UE) during a temporary interruption in the use of the first code (C_HS-DPCCH),
means (NODE B: TRANSMIT POWER C_HS-DPCCH) for ascertaining - during the temporary interruption - a transmission power which is available for the use of the first code (C_HS-DPCCH) by the subscriber station (UE), for the purpose of use for a decision about resumption by the subscriber station (UE) of the use of the first code (C_HS-DPCCH) after the temporary interruption in the use of the first code (C_HS-DPCCH).

## Revendications

1. Procédé de communication radio dans un système de radiocommunication avec des procédés d'accès multiple par plage de codes, dans lequel
sont transmis, d'une station d'usager (UE) vers une station radio côté réseau (NODE B), des premiers messages avec utilisation d'un premier code (C_HS-DPCCH) et des deuxièmes messages avec utilisation d'un deuxième code (C_DEDICATED),
l'utilisation du premier code (C_HS-DPCCH) par la station d'usager (UE) est interrompue temporairement et l'utilisation du deuxième code (C_DEDICATED) se poursuit pendant l'interruption,
**caractérisé en ce que**
l'utilisation du premier code (C_HS-DPCCH) par la station d'usager (UE) reprend en fonction d'une puissance d'émission disponible pour l'utilisation du premier code (C_HS-DPCCH) par la station d'usager (UE).

2. Procédé selon la revendication 1, **caractérisé en ce que** la puissance d'émission disponible pour l'utilisation du premier code (C_HS-DPCCH) par la station d'usager (UE) dépend d'une puissance d'émission pouvant être mise en oeuvre par la station d'usager (UE) au maximum et d'une puissance d'émission pouvant être mise en oeuvre pour l'utilisation du deuxième code (C_DEDICATED) par la station d'usager (UE).

3. Procédé selon la revendication 1 ou 2, **caractérisé en ce que** la puissance d'émission disponible pour l'utilisation du premier code (C_HS-DPCCH) par la station d'usager (UE) est déterminée par la station d'usager (UE) pendant l'interruption de l'utilisation du premier code (C_HS-DPCCH).

4. Procédé selon la revendication 3, **caractérisé en ce qu'**interviennent, dans la détermination de la puissance d'émission disponible pour l'utilisation du premier code (C_HS-DPCCH) par la station d'usager (UE) :
- une puissance d'émission pouvant être mise en oeuvre par la station d'usager (UE) au maximum ;
- une puissance d'émission actuellement mise en oeuvre, pendant l'interruption de l'utilisation du premier code (C_HS-DPCCH), par la station d'usager (UE) pour l'utilisation du deuxième code (C_DEDICATED) et
- une autre puissance d'émission pouvant être mise en oeuvre pas la station d'usager (UE) pour l'utilisation du deuxième code (C_DEDICATED).

5. Procédé selon la revendication 1 ou 2, **caractérisé en ce que** la puissance d'émission disponible pour l'utilisation du premier code (C_HS-DPCCH) par la station d'usager (UE) est déterminée par un dispositif côté réseau (NODE B) pendant l'interruption de l'utilisation du premier code (C_HS-DPCCH).

6. Procédé selon la revendication 5, **caractérisé en ce qu'**interviennent, dans la détermination de la puissance d'émission disponible pour l'utilisation du premier code (C_HS-DPCCH) par la station d'usager (UE),
- des informations sur un débit de données actuellement mis en oeuvre par la station d'usager (UE) pour la transmission de données avec utilisation du deuxième code (C_DEDICATED) et
- des informations sur un débit de données mis en oeuvre par la station d'usager (UE) directement avant l'interruption de l'utilisation du premier code (C_HS-DPCCH) pour la transmission de données avec utilisation du deuxième code (C_DEDICATED).

7. Procédé selon la revendication 5 ou 6, **caractérisé en ce qu'**interviennent, dans la détermination de la puissance d'émission disponible pour l'utilisation du premier code (C_HS-DPCCH) par la station d'usager (UE),
- des informations sur des signaux de commande de la puissance d'émission envoyés par la station radio côté réseau (NODE B) à la station d'usager (UE) pendant l'interruption de l'utilisation du premier code (C_HS-DPCCH).

8. Procédé selon l'une des revendications 1 à 7, **caractérisé en ce que** les premiers messages sont des messages d'un canal HS-DPCCH et les deuxièmes messages, des messages d'un canal DPDCH ou d'un canal DPCCH d'un système de radiocommunication UMTS.

9. Station d'usager (UE) pour un système de radiocommunication avec des procédés d'accès multiple par plage de codes, comportant
- des moyens (TRANSMIT C_HS-DPCCH, TRANSMIT C_DEDICATED) pour envoyer à une station radio côté réseau (NODE B) des premiers messages en utilisant un premier code (C_HS-DPCCH) et des deuxièmes messages en utilisant un deuxième code (C_DEDICATED),
- des moyens (STOP C_HS-DPCCH) pour interrompre l'utilisation du premier code (C_HS-DPCCH) et pour poursuivre l'utilisation du deuxième code (C_DEDICATED) pendant l'interruption de l'utilisation du premier code (C_HS-DPCCH), **caractérisée en ce que**
elle comporte en outre
des moyens (START C_HS-DPCCH) pour reprendre l'utilisation du premier code (C_HS-DPCCH) en fonction d'une puissance d'émission disponible pour l'utilisation du premier code (C_HS-DPCCH).

10. Station d'usager (UE) selon la revendication 9, avec des moyens (UE : TRANSMIT POWER C_HS-DPCCH) pour déterminer la puissance d'émission disponible pour l'utilisation du premier code (C_HS-DPCCH).

11. Dispositif côté réseau (NODE B) pour un système de radiocommunication avec des procédés d'accès multiple par plage de codes, comportant des moyens (RECEIVE C_HS-DPCCH, RECEIVE C_DEDICATED) pour recevoir d'une station d'usager (UE) des premiers messages émis avec utilisation d'un premier code (C_HS-DPCCH) et des deuxièmes messages émis avec utilisation d'un deuxième code (C_DEDICATED),
**caractérisé en ce que**
il comporte en outre :
- des moyens pour recevoir de la station d'usager (UE) des messages émis avec utilisation du deuxième code (C_DEDICATED) pendant une interruption temporaire de l'utilisation du premier code (C_HS-DPCCH),
- des moyens (NODE B : TRANSMIT POWER C_HS-DPCCH) pour déterminer, pendant l'interruption temporaire, une puissance d'émission disponible pour l'utilisation du premier code (C_HS-DPCCH) par la station d'usager (UE), pour utilisation en cas de décision de reprise par la station d'usager (UE), de l'utilisation du premier code (C_HS-DPCCH) après l'interruption temporaire de l'utilisation du premier code (C_HS-DPCCH).
